# EUROPÄISCHE PATENTSCHRIFT

(11) **EP 1 571 382 B1**
(45) Veröffentlichungstag und Bekanntmachung des Hinweises auf die Patenterteilung: **29.10.2014**
(21) Anmeldenummer: 05003905.6
(22) Anmeldetag: 23.02.2005
(51) Int. Cl.: F16L 9/08, F16L 21/03, F16L 58/18, F16L 58/10

(54) **Betonrohr mit korrosionsfester Innenauskleidung**
Concrete pipe with corrosion-resistant lining
Tuyau en béton ayant un revêtement intérieur anticorrosion

(30) Priorität: 01.03.2004 DE 202004003139 U
(43) Veröffentlichungstag der Anmeldung: 07.09.2005
(73) Patentinhaber: Gebr. Fasel Betonwerk GmbH, 56472 Nisterau (DE)
(72) Erfinder: Fasel, Stefan, 56472 Nisterau (DE)
(74) Vertreter: Laufhütte, Dieter

(56) Entgegenhaltungen:
- EP-A- 0 426 147
- DE-A1- 10 109 415
- DE-U1- 29 804 587

## Beschreibung

Die Erfindung betrifft ein Rohr aus Beton mit einer aus einem Kunststoffrohr bestehenden korrosionsfesten Innenauskleidung nach dem Oberbegriff des Anspruchs 1.

Es sind sowohl Rohre aus Beton wie auch aus Kunststoff bekannt. Im zweiten Fall werden sie hauptsächlich aus Kunststoff gezogen, während die aus Beton gefertigten Rohre in einer an sich bekannten, aufrechtstehenden Form mit einem verschiebbaren Kern hergestellt werden. Diese Rohre, die zum Großteil bei Entwässerungssystemen verwendet werden, unterliegen im Rahmen des Umweltschutzes immer höheren Anforderungen, die den heutigen Bedürfnissen kaum mehr gerecht werden. Dies liegt vor allem daran, dass sie unter immer aggressiverem und stark säurehaltigem Abwasser schneller korrodieren und dadurch undicht bzw. zerstört werden. Derartige Korrosionen machen aber auch einen ständigen Austausch und schließlich eine Nachverlegung neuer Rohre öfter nötig als dies noch bis vor wenigen Jahren erforderlich war. Um diese Nachteile zu vermeiden, wurde es bereits bekannt, Betonrohre in Verbindung mit einem Kunststoffrohr herzustellen. Da diese Rohre in üblicher Weise wie Betonrohre jeweils mit ihrem einen Spitzende in das nächstfolgende muffenförmig breite Rohrende eingeschoben starr verbunden werden, gehen diese Spitzenden leicht zu Bruch. Außerdem sind diese Rohre in Folge Ihres starren festen Zusammenbaus mangels genügender Vorkehrungen für temperaturbedingte Ausdehnungsmöglichkeiten der Kunststoffteile zu den Betonteilen und den Betonteilen zu Betonteilen beim Zusammenstecken der Rohre spannungsbedingten Reißens des Betonkörpers und/oder Bersten der zusammengesteckten Betonrohrenden ausgesetzt, so dass diese Rohrteile aus diesem Grund zerstört, gegen neue Rohre ersetzt werden müssen.

Aus der DE-U-8 132 729 ist bereits ein Betonrohr mit einer aus einem Kunststoffrohr bestehenden korrosionsfesten Innenauskleidung bekannt, dessen eines Ende als Rohrspitz-Endteil und dessen anderes Ende als Rohrmuffen-Endteil zur Aufnahme eines Rohrspitz-Endteils des folgenden Rohres ausgebildet ist, wobei am Rohrspitz-Endteil das Kunststoffrohr um einen Überstand übersteht, wobei zwischen dem stirnseitigen Ende des Rohrmuffen-Endteils und einem in das Rohrinnere einspringenden rundumlaufenden Absatz an der Rohrinnenseite des Kunststoffrohres eine rundumlaufende Ausnutung zur Aufnahme eines elastomeren Dichtungsringes angeordnet ist, wobei der gerade verlaufenden, in dem Rohrmuffen-Endteil einsteckbare Überstand so lang ist, dass er die umlaufende Ausnutung mit ihrem Dichtungsring überdeckt und wobei das Rohr aus Beton das Kunststoffrohr bis zum einschiebbaren Überstand des Rohrspitz-Endteils überdeckt, wobei der in das Rohrinnere einspringende rundumlaufende Absatz des innenliegenden Kunststoffrohres abgeschrägt ist.

Aus der DE-U-8 806 158 ist ein Rohr aus Beton mit einer korrosionsfesten Innenauskleidung aus Kunststoff bekannt, bei welchem eine verbundfeste Vereinigung zwischen dem Betonmantel und der Kunststoffauskleidung erfolgt. Dies kann aufgrund der unterschiedlichen Wärmeausdehnungskoeffizienten der Materialien im praktischen Einsatz zur spannungsbedingten Zerstörung führen.

Aus der EP 426 147 B1 ist ein Betonrohr bekannt, bei dem bereits das aus Kunststoff bestehende Rohrspitz-Endteil durch eine Dichtung gegenüber dem ebenfalls aus Kunststoff bestehenden Rohrinnenteil des benachbarten Rohres abgedichtet wird. Weiterhin ist zwischen dem nur aus Beton bestehenden Rohrmuffen-Endteil und dem Betonrohrspitzen-Endteil des benachbarten Rohres eine rundumlaufende, ringförmige Dichtung aus flexiblem Material angeordnet. Diese Rohre haben sich als korrosionsfeste Rohre seit einigen Jahren aufgrund ihrer augenscheinlichen Vorteile etablieren können. Allerdings ist bei diesen Rohren festzustellen, dass die nach dem Verlegen der obligatorischen Luftdruckprüfung nicht immer standhalten. Das bedeutet, dass im Bereich der Rohrübergänge undichte Stellen auftreten können, durch die die eingepumpte Druckluft entweichen kann.

DE 10109415 A1 offenbart ein Betonrohr gemäß dem Oberbegriff des Anspruchs 1.

Aufgabe der Erfindung ist es, die gattungsgemäßen Betonrohre mit einer aus einem Kunststoff bestehenden korrosionsfesten Innenauskleidung nach dem Oberbegriff des Anspruchs 1 derart weiterzubilden, dass sie zu dichten Rohrleitungen verlegbar sind, die auch einer üblichen Luftdruckprüfung standhalten.

Erfindungsgemäß wird die Aufgabe durch die Kombination der Merkmale des Anspruchs 1 gelöst. Demnach wird ein Betonrohr mit einer aus einem Kunststoff bestehenden korrosionsfesten Innenauskleidung, dessen eines Ende als Rohrspitz-Endteil und dessen anderes Ende als Rohrmuffen-Endteil zur Aufnahme eines Rohrspitz-Endteils des folgenden Rohres ausgebildet ist geschaffen, wobei am Rohrspitz-Endteil das Kunststoffrohr um einem Überstand übersteht, wobei an der Rohrinnenseite des Kunststoffrohres eine rundumlaufende Nut zur Aufnahme eines elastomeren Dichtungsrings angeordnet ist, wobei der gerade verlaufende, in den Rohrmuffen-Endteil einsteckbare Überstand so lang ist, dass er die umlaufende Nut überdeckt und wobei die aus Kunststoff bestehende Innenauskleidung auch das Rohrmuffen-Endteil des Betonrohres auskleidet. Durch diese zusätzliche Auskleidung der Muffe wird bei entsprechender Anordnung einer Dichtung im Bereich zwischen Muffen-Endteil und Rohrspitzen-Endteil des benachbarten Rohres die Dichtigkeit des Rohres soweit sichergestellt, dass hier die Rohrleitung nach Verlegen einer Luftdruckprüfung standhält.

Gemäß der Erfindung geht die aus Kunststoff bestehende Innenauskleidung des Betonrohres einstückig von dem Rohrmuffen-Endteil zum Rohr über. Hier ist also keine Stoßstelle oder Schweißnaht vorzusehen.

Bevorzugte Ausgestaltungen der Erfindung ergeben sich aus den sich an den Hauptanspruch anschließenden Unteransprüchen.

So kann die aus Kunststoff bestehende Innenauskleidung des Betonrohrs auch die Stoßfläche des Rohrmuffen-Endteils überdecken. Hierdurch wirkt besonders vorteilhaft das Abschlagen des spröden Betons während des Handlings der Rohre und einem unerwünschten Anschlagen der Rohrmuffenkante an ein Hindernis verhindert.

Besonders vorteilhaft ist im Bereich des Rohrmuffen-Endteils an die Rohrinnenseite des Kunststoffrohres eine rundumlaufende Nut zur Aufnahme eines elastomeren Dichtungsringes angeordnet. Durch diese Maßnahme kann der Dichtungsring, der zwischen dem Rohrmuffen-Endteil einerseits und dem Betonrohrspitzen-Endteil des Nachbarrohres vorzusehen ist, zuverlässig und sicher positioniert werden. Die früher vorzusehende Spitzendichtung wird durch die elastomere Dichtung, die in diese rundumlaufende Nut eingesetzt wird, ersetzt.

Weitere Merkmale, Einzelheiten und Vorteile der Erfindung werden anhand eines in der Zeichnung dargestellten Ausführungsbeispiels näher erläutert.

Es zeigen:
Fig. 1: mehrere verlegte Rohre in Teilansicht in schematischer Darstellung im Schnitt und
Fig. 2: eine Teilansicht eines Rohrausschnittes einer Verbindung zweier fertig verlegter Rohre in perspektivischer Darstellung.

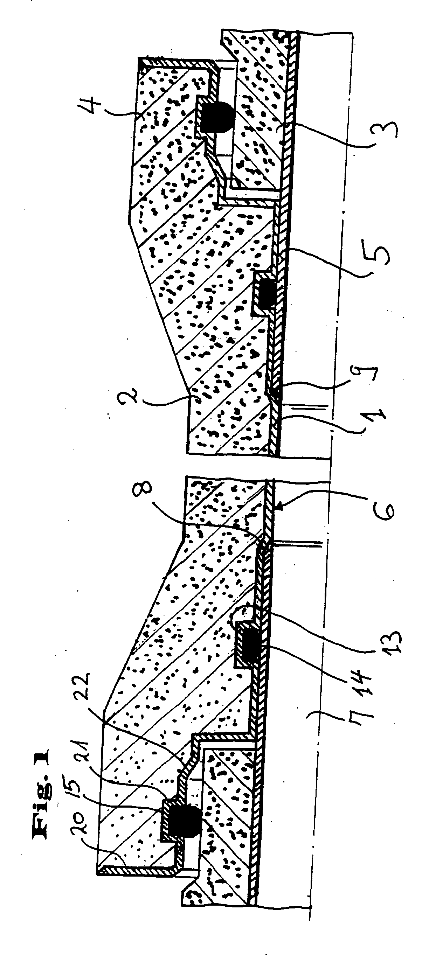

In Fig. 1 ist ein Kunststoffrohr 1 gezeigt, das mit einer Betonummantelung 2 versehen ist, wobei das Kunststoffrohr als eine korrosionsfeste, flüssigkeitsdichte Innenauskleidung des Betonrohres 2 dient, von dem ein Ende ein Rohrspitz-Endteil 3 und das andere Ende als ein Rohrmuffenendteil 4 ausgebildet ist, wobei über die Endteile 3 und 4 die Betonrohre miteinander zu einer Rohrleitung verbunden sind. Hierbei wird das Rohrspitz-Endteil 3 des einen Rohres in das Rohrmuffen-Endteil des anderen Rohres eingesteckt. Als Justier- und Einsteckhilfe dient hierbei ein Überstand 5 des Kunststoffrohres 1 mit dem dieses am Rohrspitz-Endteil über das Betonrohr 2 bzw. seine Betonummantelung 2 übersteht. Zum einwandfreien Festlegen der miteinander zu verbindenden Rohre ist die Innenwandung 6 des Rohrmuffen-Endteils 4 mit einem in das Rohrinnere 7 zurückspringenden, rundumlaufenden Absatz 8 versehen, auf dem das stirnseitige Ende 9 des Kunststoffrohrüberstandes 5 abstützbar ist. Zweckmäßig sind das stirnseitige Ende 9 und der Absatz 8 in Fli8eßrichtung des im Rohr zu befördernden Abwassers und dergleichen abgeschrägt, um Stauungen der Flüssigkeit bei Schmutzansammlungen im Spaltbereich zu vermeiden, wie dies auch in der Fig. 1 dargestellt ist.

Hierbei entspricht die Höhe des Absatzes 8 im Wesentlichen der Wandstärke des den Überstand bildenden Kunststoffrohres 1.

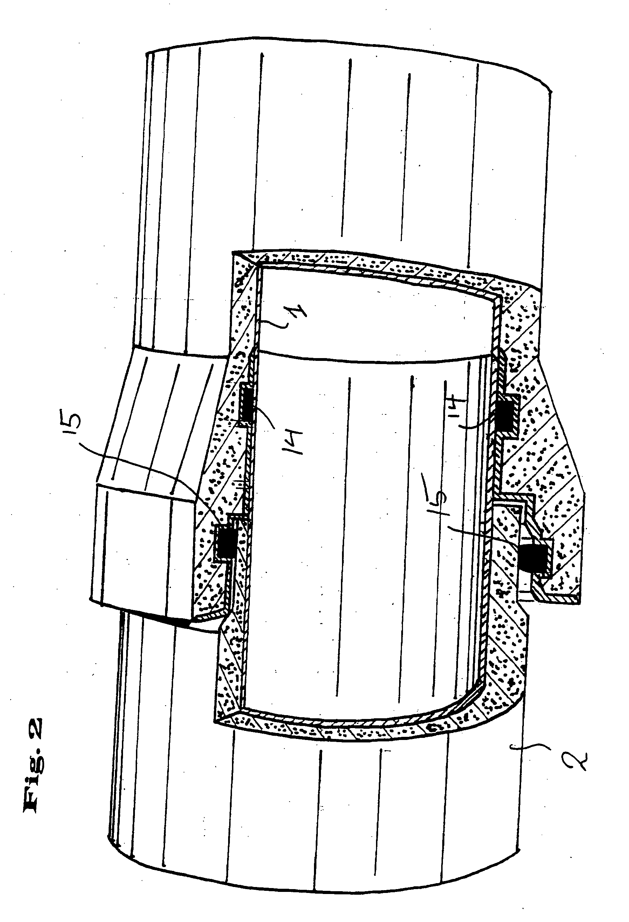

Des weiteren ist im Rohrmuffen-Endteil 4 des Kunststoffrohres zwischen dem Kunststoffrohr-Muffenende und dem Absatz 8 eine dem Rohrinneren 7 zugewandte rundumlaufende Nut 13 vorgesehen, in der eine ringförmige, vorteilhaft flache Dichtung aus einem natürlichen oder synthetischen flexiblen Material, z. B. Latex, eingebracht werden kann. Die flache Ringform ist deshalb einer rundförmigen zu bevorzugen, da sie fest und unverrutschbar in der, in ihrem Querschnitt vorteilhaft rechteckigen Nut 13 sitzen kann. Der gerade in den Rohrmuffen-Endteil einsteckbare Überstand 5 muss hierbei so lang sein, dass er einerseits die umlaufende Nut mit ihrer Dichtung 14 abdeckt und andererseits mit einem stirnseitigen Ende 9 sich am Absatz 8 abstützen kann (vgl. Fig. 2).

Das Kunststoffrohr 1 deckt aber nicht nur die Innenwand 6 des Rohres ab, sondern auch den Innenwandbereich des Rohrmuffen-Endteils 4. Auch die äußere Kante des Rohrmuffen-Endteils 20 ist von dem Kunststoffrohr 1 überdeckt. Dabei wird das Kunststoffrohr 1 einstückig ausgebildet, d. h. es ist hier am Übergang vom Betonrohr 2 zum Rohrmuffen-Endteil 4 keine Stoßnaht, beispielsweise Schweißnaht, vorhanden.

Im Bereich des Rohrmuffen-Endteils ist im Kunststoffrohr 1 eine weitere Nut 21 ausgenommen, in welcher ebenfalls eine aus natürlichem oder synthetischen flexiblen Material, beispielsweise Latex, bestehende Dichtung 15 angeordnet ist.

Wie in der Fig. 2 weiter dargestellt, ist im Rohrmuffen-Endteil ein Absatz 22 vorgesehen.

Die nach der Erfindung hergestellten Verbundrohre ermöglichen mit nur wenigen Dichtungen 14 und 15 nicht nur eine sehr gute Abdichtung gegen Flüssigkeitsaustritt, sondern durch ihren Überstand 5 an jedem Rohrende auch ein überlappendes unmittelbares Verbinden ohne Zwischenstücke der Beton-Kunststoff-Verbundrohre miteinander. Durch die zusätzliche Auskleidung mit Kunststoff im Bereich des Rohrmuffen-Endteils und eine entsprechend in diesem Bereich vorzusehende Dichtung 15 ist auch eine weitgehend luftdruckdichte Verbindung gewährleistet, wobei diese noch dadurch verbessert wird, dass im Bereich des Rohrmuffen-Endteils im Kunststoffrohr eine Nut 21 ausgenommen ist, in welcher der Dichtungsring 15 sitzt. Durch die verwendeten flexiblen Dichtungs- und Abdichtungsmittel 14, 15 ist auch eine große axiale und laterale Bewegungsfreiheit zum Dehnen und Zusammenziehen der Rohre in ihren Verbundbereichen als auch zwischen Betonrohr und Kunststoffbeschichtung gegeben, so dass entsprechende Spannungen durch Temperatureinflüsse bzw. Temperaturschwankungen, die zum Reißen oder gar Zerstören der Rohre führen, dadurch ausgeglichen werden können. Außerdem sind auch die im Rohr zum Verbinden und Abdichten der Verbindungsstelle erforderlichen Zwischenverbindungsstücke wie beispielsweise Doppelmuffen-Verbindungsstücke mit ihren für jedes der beiden Rohrenden erforderlichen Dichtungen 14, wie sie bei einem bekannten Beton-Kunststoffverbundrohr gebräuchlich sind, durch die nunmehr mögliche überlappende unmittelbare Rohrverbindung, entbehrlich.

## Patentansprüche

1. Betonrohr (2) mit einer aus einem Kunststoff bestehenden korrosionsfesten Innenauskleidung (1), dessen eines Ende als Rohrspitz-Endteil (3) und dessen anderes Ende als Rohrmuffen-Endteil (4) zur Aufnahme eines Rohrspitz-Endteils (3) des folgenden Rohres (2) ausgebildet ist, wobei am Rohrspitz-Endteil (3) das Kunststoffrohr (1) um einen Überstand (5) übersteht, wobei an der Rohrinnenseite (7) des Kunststoffrohres (1) eine rundumlaufende Nut (13) zur Aufnahme eines elastomeren Dichtungsringes (14) angeordnet ist und wobei der gerade verlaufende, in den Rohrmuffen-Endteil (4) einsteckbare Überstand (5) so lang ist, daß er die umlaufende Nut (13) überdeckt,
wobei die aus Kunststoff bestehende Innenauskleidung (1) auch das Rohrmuffen-Endteil (4) des Betonrohres (2) auskleidet,
**dadurch gekennzeichnet,**
**dass** die aus Kunststoff bestehend Innenauskleidung (1) des Betonrohres (2) einstückig von dem Rohrmuffen-Endteil (4) zum Betonrohr (2) übergeht und dass am Übergang vom Betonrohr (2) zum Rohrmuffen-Endteil (4) keine Stoßnaht vorhanden ist.

2. Betonrohr (2) mit einer aus einem Kunststoff bestehenden korrosionsfesten Innenauskleidung (1) nach Anspruch 1, **dadurch gekennzeichnet, dass** die aus Kunststoff bestehend Innenauskleidung (1) des Betonrohres (2) auch die Stoßfläche (20) des Rohrmuffen-Endteiles (4) überdeckt.

3. Betonrohr (2) mit einer aus einem Kunststoff bestehenden korrosionsfesten Innenauskleidung (1) nach Anspruch 1 oder 2, **dadurch gekennzeichnet, dass** im Bereich des Rohrmuffen-Endteils (4) an der Rohrinnenseite des Kunststoffrohres (1) eine rundumlaufende Nut (21) zur Aufnahme eines elastomeren Dichtungsringes (15) angeordnet ist.

## Claims

1. A concrete pipe (2) having a corrosion-resistant inner lining (1) consisting of plastic whose one end is made as a pipe spigot end piece (3) and whose other end is made as a pipe socket end piece (4) to receive a pipe spigot end part (3) of the following pipe (2), with the plastic pipe (1) projecting by an overhang (5) at the pipe spigot end part (3), with an all-round peripheral groove (13) being arranged at the pipe interior (7) of the plastic pipe (1) to accept an elastomer sealing ring (14) and with the overhang (5) which extends in a straight line and is insertable into the pipe socket end part (4) being so long that it covers the peripheral groove (13),
wherein the inner lining (1) consisting of plastic also lines the pipe socket end part (4) of the concrete pipe (2),
**characterized in that**
the inner lining (1) of the concrete pipe (2) consisting of plastic merges in one piece from the pipe socket end part (4) to the concrete pipe (2) and **in that** no abutment seam is present at the transition from the concrete pipe (2) to the pipe socket end part (4).

2. A concrete pipe (2) having a corrosion-resistant inner lining (1) consisting of plastic in accordance with claim 1, wherein the inner lining (1) of the concrete pipe (2) consisting of plastic also covers the abutting surface (20) of the pipe socket end part (4).

3. A concrete pipe (3) having a corrosion-resistant inner lining (1) consisting of plastic in accordance with either of claims 1 or 2, wherein an all-round peripheral groove (21) is arranged in the region of the pipe socket end part (4) at the pipe interior of the plastic pipe (1) to accept an elastomer sealing ring (15).

## Revendications

1. Tuyau en béton (2) ayant un revêtement intérieur anticorrosion (1) constitué d'une matière plastique, dont une extrémité est réalisée en tant qu'embout mâle de tuyau (3) et dont l'autre extrémité est réalisée en tant qu'embout femelle de tuyau (4) destiné à recevoir un embout mâle de tuyau (3) du tuyau suivant (2), dans lequel sur l'embout mâle de tuyau (3) le tuyau en matière plastique (1) dépasse avec une saillie (5), dans lequel une rainure périphérique (13) est disposée sur le côté intérieur de tuyau (7) du tuyau en matière plastique (1) pour recevoir une bague d'étanchéité élastomère (14) et dans lequel la saillie (5) droite pouvant être emboîtée dans l'embout femelle de tuyau (4) est si longue qu'elle recouvre la rainure périphérique (13),
dans lequel le revêtement intérieur (1) constitué de matière plastique revêt également l'embout femelle de tuyau (4) du tuyau en béton (2),
**caractérisé en ce que**,
le revêtement intérieur (1) constitué de matière plastique du tuyau en béton (2) se prolonge d'un seul tenant de l'embout femelle de tuyau (4) au tuyau en béton (2) et **en ce qu'**il n'y a aucun assemblage bout à bout à la transition entre le tuyau en béton (2) et l'embout femelle de tuyau (4).

2. Tuyau en béton (2) ayant un revêtement intérieur anticorrosion (1) constitué de matière plastique selon la revendication 1, **caractérisé en ce que** le revêtement intérieur (1) constitué de matière plastique du tuyau en béton (2) recouvre également la surface de jointure (20) de l'embout femelle de tuyau (4).

3. Tuyau en béton (2) ayant un revêtement intérieur anticorrosion (1) constitué de matière plastique selon la revendication 1 ou 2, **caractérisé en ce qu'**une rainure périphérique (21) est disposée dans la zone de l'embout femelle de tuyau (4) sur le côté intérieur de tuyau du tuyau en matière plastique (1) pour recevoir une bague d'étanchéité élastomère (15).
